Europäisches Patentamt

European Patent Office

Office européen des brevets

(19)

(11) EP 0 658 971 B1

(12) **FASCICULE DE BREVET EUROPEEN**

(45) Date de publication et mention
de la délivrance du brevet:
**22.07.1998 Bulletin 1998/30**

(51) Int Cl.⁶: **H02P 5/40**

(21) Numéro de dépôt: **94402644.2**

(22) Date de dépôt: **21.11.1994**

(54) **Système de contrôle d'alimentation d'un moteur asynchrone**

System zur Steuerung der Stromversorgung eines Asynchronmotors

Power supply control system of an asynchronous motor

(84) Etats contractants désignés:
**CH DE FR GB IT LI SE**

(30) Priorité: **16.12.1993 FR 9315274**

(43) Date de publication de la demande:
**21.06.1995 Bulletin 1995/25**

(73) Titulaire: **SCHNEIDER ELECTRIC SA**
**92100 Boulogne Billancourt (FR)**

(72) Inventeurs:
 • **Cornilleau, Hubert**
  **F-78480 Verneuil Sur Seine (FR)**
 • **Almeida, Antonio**
  **F-77220 Tournan en Brie (FR)**
 • **Perrin, Lucien**
  **F-75011 Paris (FR)**
 • **Nguyen Phuoc, Vinh T.**
  **F-92100 Boulogne (FR)**

(74) Mandataire: **Saint Martin, René**
 **Schneider Electric SA,**
 **Service Brevets,**
 **33 bis, avenue du Maréchal Joffre**
 **92002 Nanterre Cédex (FR)**

(56) Documents cités:
 **EP-A- 0 165 020**   **EP-A- 0 177 114**
 **DE-A- 3 826 892**

 • **JOURNAL DE PHYSIQUE, vol.3, no.6, Juin 1993,**
  **PARIS FR pages 1123 - 1133, XP000368484**
  **T.OURTH 'Commande vectorielle d'un moteur**
  **asynchrone sans capteur'**
 • **PATENT ABSTRACTS OF JAPAN vol. 7, no. 243**
  **(E-207) 28 Octobre 1983 & JP-A-58 130 795**
  **(HITACHI SEISAKUSHO) 4 Août 1983**
 • **PATENT ABSTRACTS OF JAPAN vol. 8, no. 131**
  **(E-251) (1568) 19 Juin 1984 & JP-A-59 041 194**
  **(FUJI DENKI SEIZO K.K.) 7 Mars 1984**
 • **PATENT ABSTRACTS OF JAPAN vol. 6, no. 226**
  **(E-141) 11 Novembre 1982 & JP-A-57 129 198**
  **(HITACHI SEISAKUSHO KK) 11 Août 1982**
 • **IEEE TRANSACTIONS ON INDUSTRY**
  **APPLICATIONS, vol.IA-22, no.3, Juin 1986, NEW**
  **YORK US pages 453 - 459 MASATO KOYAMA ET**
  **AL. 'Microprocessor-Based Vector Control**
  **System for Induction Motor Drives with Rotor**
  **Time Constant Identification Function'**

**Description**

La présente invention concerne un système de contrôle d'alimentation d'un moteur de type asynchrone.

Les moteurs asynchrones sont généralement alimentés à partir d'un réseau alternatif par l'intermédiaire d'un variateur de vitesse. Le variateur de vitesse est un convertisseur de fréquence comprenant un pont redresseur relié au réseau, un circuit intermédiaire de tension continue muni d'un condensateur, et un onduleur doté d'interrupteurs statiques commandés par un dispositif à modulation d'impulsions et relié aux enroulements de phase du moteur.

Le document DE-A-3 826 892 décrit un contrôle vectoriel d'un moteur asynchrone comprenant un modèle mathématique pour déterminer la vitesse électrique de rotation du moteur en cours d'alimentation et commander le vecteur tension à appliquer au moteur.

Il est connu, lors d'une coupure d'alimentation du moteur, de laisser tourner celui-ci en roue libre. On garde ainsi le contrôle du dispositif de commande.

Cependant la reprise à la volée du contrôle de la vitesse initiale du moteur effectuée sans précaution peut entraîner des surintensités importantes ainsi qu'une perte momentanée de la vitesse. Les pics d'intensités risquent d'endommager les interrupteurs disposés dans l'onduleur.

L'invention a par conséquent pour but de réaliser un système permettant, après la coupure d'alimentation du moteur, une reprise de contrôle de la vitesse sans apparition de surintensité.

Ainsi il convient de déterminer la vitesse électrique $\omega$ du moteur et de positionner angulairement le vecteur tension par rapport au flux du moteur au moment de la réapparition de l'alimentation. On rappelle que le vecteur tension est une représentation mathématique traduisant la résultante des tensions réelles appliquées au moteur, et que la vitesse électrique est le produit de la vitesse mécanique du moteur par le nombre de pôles.

Ce but est atteint grâce à des moyens de reprise contrôlée de la vitesse tels qu'une structure d'identification, qui d'une part estime la vitesse électrique du moteur, et d'autre part, positionne angulairement le vecteur tension dans un repère tournant orthogonal (d,q) où l'axe (d) correspond au flux du moteur.

La structure d'identification comprend avantageusement une structure d'estimation de la vitesse réalisée à partir d'un bloc de calcul d'angle qui détermine la position angulaire du vecteur tension en calculant son angle $\alpha$ par rapport à un repère orthogonal $(\alpha,\beta)$ fixe par rapport au stator du moteur, et d'un bloc dérivateur qui dérive l'angle $\alpha$.

Le bloc de calcul d'angle détermine les coordonnées $V_\alpha$ et $V_\beta$ du vecteur tension dans le repère fixe $(\alpha, \beta)$ pour en déduire l'angle $\alpha$.

Un bloc de positionnement positionne angulairement le vecteur tension en quadrature de phase par rapport au flux estimé du moteur.

Les moyens de reprise contrôlée comportent aussi un dispositif d'augmentation progressive de la composante $V_q$ de la tension qui est augmentée jusqu'à une valeur de commande suivant une constante de temps fonction de la constante de temps rotorique.

Par ailleurs, le système peut comprendre une structure à régulations en cascade qui permet de limiter le courant lorsque l'évolution de la tension estimée vers la tension de commande du moteur est plus rapide que la constante de temps rotorique.

La description faite ci-après en regard des dessins fera ressortir les caractéristiques et avantages de l'invention suivant un mode de réalisation particulier.

- la figure 1 représente le schéma du système conforme à l'invention ;
- la figure 2 représente un vecteur tension dans un repère fixe $(\alpha,\beta)$;
- la figure 3 représente l'algorithme correspondant à l'estimation de la vitesse électrique $\omega$ du moteur en fonction de la position angulaire du vecteur tension dans le repère $(\alpha,\beta)$;
- la figure 4 simule une reprise à la volée non contrôlée ;
- la figure 5 simule une reprise à la volée contrôlée ;

Le système est associé à un moteur M de type asynchrone triphasé.

La vitesse électrique initiale du moteur $\omega_{ref}$ est fournie par un générateur de rampe. Le générateur de rampe a reçu en entrée une vitesse de consigne $\omega_{cons}$ fixée par l'utilisateur.

Le moteur est alimenté à partir d'un réseau alternatif par l'intermédiaire d'un variateur de vitesse de type convertisseur de fréquence.

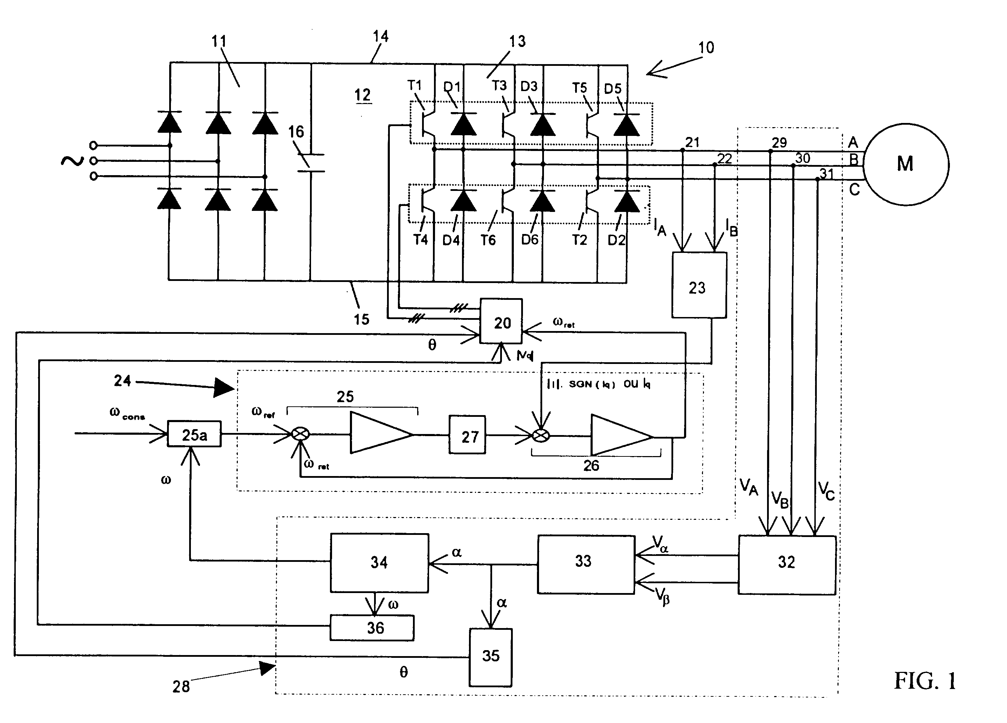

Le convertisseur statique de fréquence 10 illustré sur la figure 1 est relié au réseau de tension alternative triphasé ou éventuellement monophasé. Le convertisseur est du type à onde de tension et comporte un pont redresseur triphasé 11, un circuit intermédiaire de tension continue 12 et un onduleur 13.

Le pont redresseur 11 présente 6 diodes connectées aux phases du réseau de manière à délivrer en sortie une tension continue au circuit intermédiaire 12.

Le circuit intermédiaire comprend deux conducteurs 14,15 respectifs de voie haute et de voie basse entre lesquels est disposé un condensateur 16 de filtrage.

L'onduleur 13 est relié, côté entrée, aux conducteurs 14,15 et, côté sortie, aux conducteurs de phase A, B, C du moteur asynchrone M.

L'onduleur comprend trois couples d'interrupteurs statiques commandés, T1-T6 en parallèle auxquels sont disposées des diodes respectives D1,D6 de récupération. Chaque couple d'interrupteurs comporte deux interrupteurs cascadés T1,T4 ; T3,T6 ; T5,T2 dont l'un T1,T3,T5 est dit de voie haute et l'autre T4,T6,T2 dit de voie basse. Le point milieu de chaque couple est connecté à un enroulement de phase respectif du moteur. Un circuit de commande 20 permet de rendre passants et bloquants les interrupteurs T1 à T6 aux instants choisis.

Des organes de lecture de courant 21 et 22 constitués par des capteurs du courant circulant dans les différentes phases sont prévus sur les conducteurs de phase A et B. Ils délivrent des signaux de courant IA et IB lus dans un repère triphasé fixe (A,B,C) correspondant aux enroulements de phases A, B et C de manière à engendrer le signal de courant manquant IC.

Un bloc 23 de transformation de coordonnées transforme les signaux de courant $I_A$, $I_B$ et $I_C$ en un signal de courant Iq, composante du courant dans un repère tournant (d,q) et représentant le couple du moteur. Le repère (d, q) tourne à la vitesse de synchronisme, l'axe d correspondant au flux du moteur, et l'axe q étant disposé à $\frac{\pi}{2}$ en avant de l'axe d. Le bloc 23 délivre le module III et le signe $Sgn(I_q)$ du courant $I_q$, ou en variante $I_q$.

Le système comporte aussi une structure 24 à régulations en cascade. La structure comprend un régulateur de fréquence 25 et un régulateur de courant 26 .

Chaque régulateur est normalement constitué d'un amplificateur PI.

Le régulateur de fréquence 25 reçoit la fréquence $\omega_{ref}$ issue d'un générateur de rampe 25a et en contre-réaction la fréquence de retour $\omega_{ret}$, vitesse estimée du moteur, délivrée par le régulateur de courant 26.

Le régulateur de courant 26 reçoit une tension de référence de courant engendrée en sortie du régulateur de fréquence, ce courant représente le courant qui devrait circuler dans le moteur, et en contre-réaction le signal de courant délivré par le bloc 23. En sortie le régulateur de courant pilote le circuit de commande 20 de l'onduleur.

La tension de référence de courant peut être écrêtée par un limiteur 27. Le résultat consiste à protéger le moteur.

Enfin le système comporte une structure d'identification 28 dotée d'organes de lecture de tension 29, 30, 31, d'un bloc de transformation de coordonnées 32, d'un bloc de calcul d'angle 33, d'un bloc dérivateur 34 et d'un bloc de positionnement 35.

Les organes de lecture de tension 29, 30 et 31 constitués par des capteurs de tension sont prévus sur les conducteurs de phase A, B et C. Ils délivrent des tensions $V_A$, $V_B$ et $V_C$ lues dans le repère fixe (A,B,C) et composantes du vecteur tension.

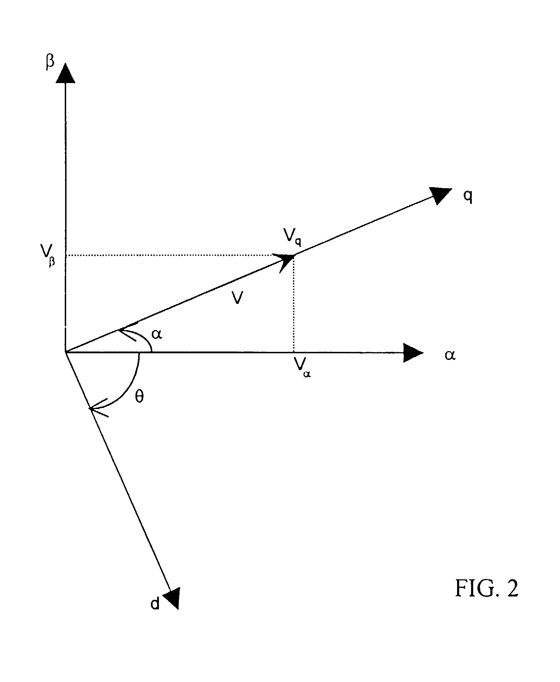

Le bloc 32 de transformation de coordonnées transforme les tensions VÅ, $V_B$, $V_C$ en des tensions $V_\alpha$ et $V_\beta$ dans un repère diphasé fixe $(\alpha, \beta)$. Le repère $(\alpha, \beta)$, représenté à la figure 2, se définit par deux axes perpendiculaires $(\alpha, \beta)$, $(\alpha)$ étant l'axe supportant l'enroulement de phase A du moteur et $(\beta)$ étant disposé à $\frac{\pi}{2}$ en avant de l'axe $(\alpha)$.

Le bloc de calcul 33 permet à partir des coordonnées $V_\alpha$ et $V_\beta$ du vecteur tension de connaître et de déterminer sa position angulaire dans le repère fixe $(\alpha, \beta)$. On définit l'angle $\alpha$ que fait le vecteur tension avec l'axe $(\alpha)$ de façon générale par :

$$\alpha = ATN \left(\frac{V_\beta}{V_\alpha}\right).$$

Le bloc de calcul 33 comprend un élément de calcul qui détermine la valeur x égale à $\frac{V_\beta}{V_\alpha}$ et une table qui définit la fonction ATN (x). Il délivre l'angle $\alpha$ correspondant à la valeur x calculée.

Enfin le bloc dérivateur 34 permet d'estimer la vitesse électrique $\omega$ du moteur telle que $\omega = \frac{d\alpha}{dt}$.

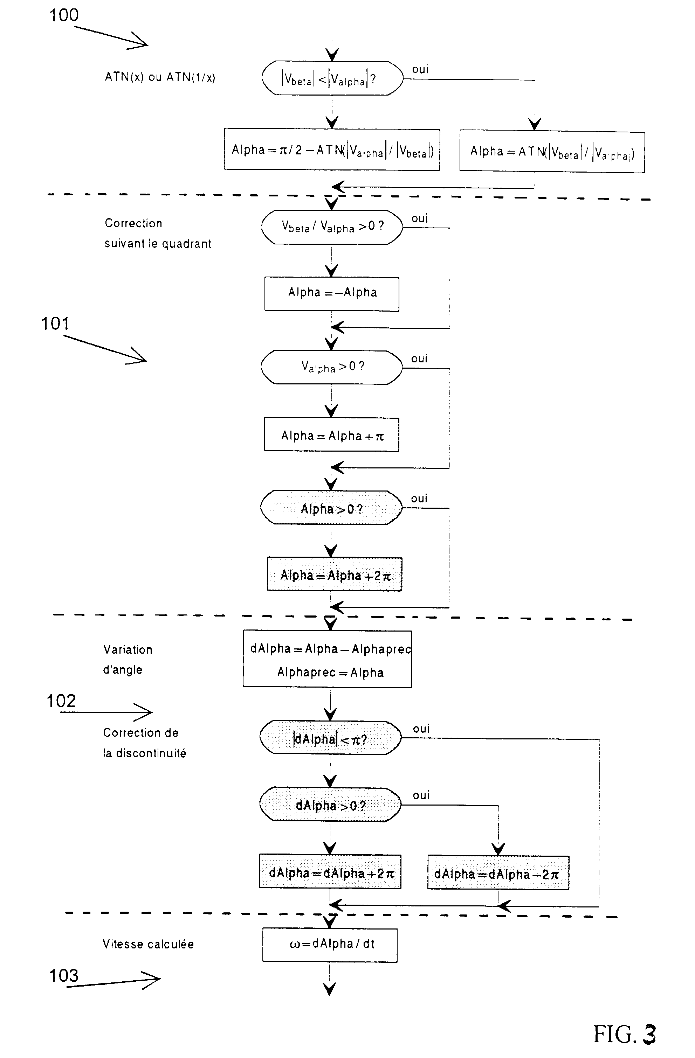

Les différentes étapes réalisées par les blocs 33 et 34 sont illustrées plus en détail à la figure 3.

L'étape 100 consiste à définir l'équation de l'angle $\alpha$ suivant la valeur du module de x. La fonction ATN (x) est définie par une table de valeurs pour x variant seulement de 0 à 1, par conséquent :

- si le module de x est inférieur à 1, on utilise la relation

$$\alpha = ATN \left(\left|\frac{V\beta}{V\alpha}\right|\right) ;$$

- si le module de x est supérieur à 1, on utilise la relation

$$\alpha = \frac{\pi}{2} - ATN \left(\left|\frac{V\alpha}{V\beta}\right|\right) .$$

L'étape 101 montre qu'il est aussi nécessaire de tenir compte du signe de $V_\alpha$ et $V_\beta$. En effet le vecteur tension pouvant être dans l'un quelconque des quadrants du repère $(\alpha, \beta)$, il faut ramener le vecteur dans le premier quadrant afin que l'angle $\alpha$ soit compris entre 0 et $\frac{\pi}{4}$.

Ainsi, l'angle $\alpha$ calculé à l'étape 100 pourra être corrigé :

- si $\frac{V\beta}{V\alpha} > 0$ et $V_\alpha > 0$, l'angle $\alpha$ étant positif, il reste donc inchangé;

- si $\frac{V\beta}{V\alpha} > 0$ et $V_\alpha < 0$, il faut alors ajouter $\pi$ à l'angle $\alpha$ et l'angle obtenu est positif;

- si $\frac{V\beta}{V\alpha} < 0$ il faut prendre l'opposé de l'angle $\alpha$, et si $V_\alpha > 0$, l'angle obtenu étant négatif, il convient alors d'ajouter $2\pi$ afin de se ramener à l'intervalle de définition $[0,2\pi]$;

- si $\frac{V\beta}{V\alpha} < 0$ il faut prendre l'opposé de l'angle $\alpha$, et si $V_\alpha < 0$ il faut alors ajouter $\pi$.

L'étape 102 correspond au calcul de la variation d'angle $\alpha$ entre deux échantillonnages. La variation ne doit pas dépasser une certaine valeur (par exemple $\pi$) ; si c'est le cas il faut retrancher $\pm 2\pi$ suivant le signe de cette variation pour supprimer toute discontinuité de 0 à $2\pi$.

Si l'angle $\alpha$ est codé par un nombre de 16 bits par exemple tel que $2^{16}$ représente $2\pi$, les opérations $\pm 2\pi$ qui viennent d'être mentionnées ne sont pas nécessaires. Elles sont représentées en grisé sur l'algorithme.

L'étape 103 montre le calcul de la vitesse électrique du moteur en fonction de la variation d'angle calculée à l'étape 102 et le temps écoulé entre deux échantillonnages.

Enfin le bloc de positionnement 35 permet en connaissant l'angle $\alpha$ de positionner le vecteur tension dans le repère (d,q) de façon qu'il soit porté par l'axe (q) en initialisant l'axe (d) correspondant au flux du moteur par rapport à l'axe ($\alpha$) selon un angle $\theta$, tel que $\theta = \alpha - \frac{\pi}{2}$ si la vitesse $\omega$ est positive (figure 2) et $\theta = \alpha + \frac{\pi}{2}$ si la vitesse $\omega$ est négative. La composante sur l'axe q du vecteur tension est nommée $V_q$.

Le fonctionnement du dispositif va maintenant être décrit :

Dans le mode de réalisation décrit, la reprise à la volée est effectuée après une coupure du réseau. Cette coupure est suffisamment longue et on ne peut pas garder le contrôle du moteur. Par conséquent le moteur est mis en roue libre.

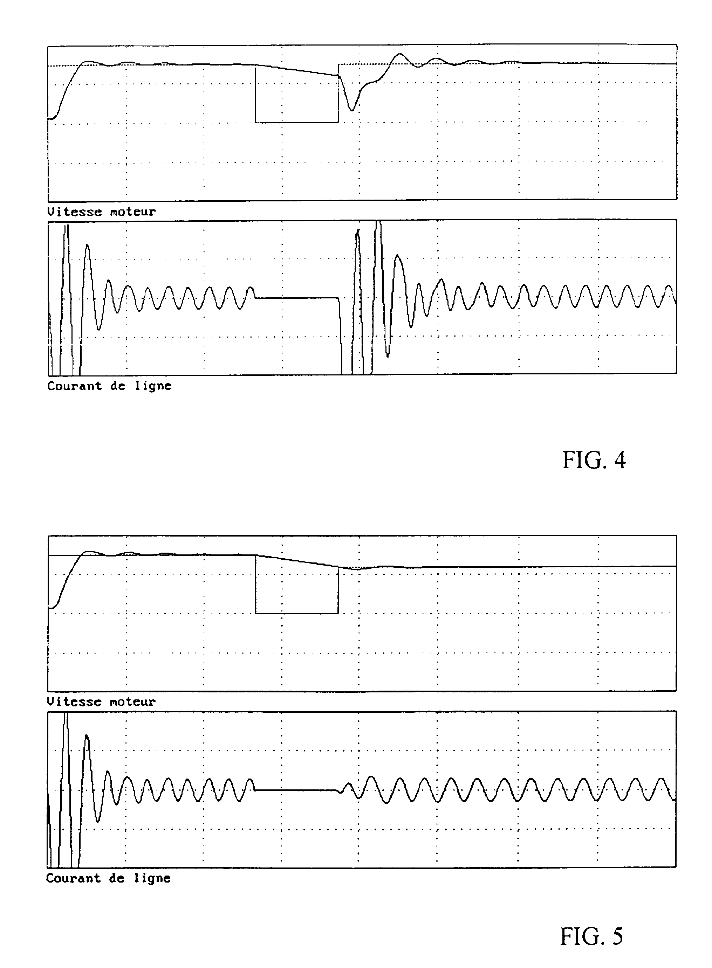

Lors de la reprise de réseau, si le dispositif de l'invention n'a pas été mis en oeuvre, on observe (figure 4) dès l'augmentation de la vitesse des pics importants d'intensité. En revanche, si le dispositif a été mis en oeuvre, aucune surintensité n'est observée (figure 5).

Lors de la reprise du réseau, il s'agit alors de connaître la vitesse électrique $\omega$ du moteur. Ainsi, dès la coupure, on estime cette vitesse toutes les 255 $\mu$s par exemple.

Les capteurs de tension délivrent la tension de chaque phase A, B et C du moteur. Le bloc 32 transforme les coordonnées $V_A$, $V_B$ et $V_C$ en $V_\alpha$ et $V_\beta$ dans le repère ($\alpha,\beta$).

Le bloc 33 calcule l'angle $\alpha$ et le bloc dérivateur 34 délivre la vitesse électrique du moteur qui est envoyée au générateur de rampe 25a pour réinitialiser la vitesse de référence $\omega_{ref}$.

Le bloc 35 positionne dans le repère (d,q) le vecteur tension de façon qu'il soit porté par l'axe q.

Ainsi lors de la reprise du réseau, pour éviter toute surintensité, la tension réappliquée est égale en module et en phase à la tension développée par le moteur.

Les moyens de reprise contrôlée 28 comportent aussi un dispositif 36 d'augmentation progressive de la composante $V_q$ de la tension qui est augmentée jusqu'à une valeur de commande suivant une constante de temps fonction de la constante de temps rotorique.

Si cette évolution est plus lente que la constante de temps rotorique, il n'y aura pas de surintensité.

Dans le cas contraire le courant sera limité par la structure 24 à régulations en cascade.

## Revendications

1. Système de contrôle d'alimentation d'un moteur asynchrone alimenté par un réseau alternatif par l'intermédiaire d'un variateur de vitesse (10) comportant un pont redresseur (11) relié au réseau, un circuit intermédiaire (12) de tension continue muni d'un condensateur (16) et un onduleur (13) muni d'interrupteurs et reliés aux enroulements de phase du moteur ; le système comportant des moyens de reprise contrôlée de la vitesse du moteur après une coupure d'alimentation du moteur, caractérisé en ce que les moyens de reprise contrôlée comprennent une structure (28) d'identification qui permet d'estimer la vitesse électrique $\omega$ du moteur à partir de la mesure de la position angulaire du vecteur tension développé par le moteur, et positionnent angulairement, dans un repère tournant orthogonal (d,q) où l'axe (d) correspond au flux du moteur et l'axe (q) étant disposé à $\frac{\pi}{2}$ en avant de (d), le vecteur tension à appliquer au moteur lors de la reprise contrôlée pour le faire correspondre au vecteur tension développé par le moteur.

2. Système selon la revendication 1, caractérisé en ce que la structure d'identification (28) comporte une structure d'estimation de la vitesse $\omega$ réalisée à partir d'un bloc de calcul d'angle (33) qui détermine la position angulaire du vecteur tension en calculant son angle $\alpha$ par rapport à un repère orthogonal ($\alpha$, $\beta$) fixe par rapport au stator du moteur, et d'un bloc dérivateur (34) qui dérive l'angle $\alpha$.

3. Système selon la revendication 2, caractérisé en ce que le bloc de calcul d'angle (33) détermine l'angle $\alpha$ par le calcul de $\frac{V\beta}{V\alpha}$ où V$\alpha$ et V$\beta$ sont les coordonnées du vecteur tension V dans le repère ($\alpha,\beta$) et par une table de valeurs qui définit une fonction ATN ($\frac{V\beta}{V\alpha}$).

4. Système selon l'une quelconque des revendications, caractérisé en ce que la structure d'identification (28) comprend un bloc de positionnement (35) du vecteur tension dans le repère (d,q) de façon que le vecteur tension soit porté par l'axe (q) en initialisant l'axe (d) par rapport à l'axe ($\alpha$) selon un angle $\theta$, tel que $\theta = \alpha - \frac{\pi}{2}$ ou $\theta = \alpha + \frac{\pi}{2}$ suivant le signe de la vitesse du moteur.

5. Système selon l'une quelconque des revendications, caractérisé en ce que les moyens de reprise contrôlée comportent un dispositif (36) d'augmentation progressive de la composante $V_q$ de la tension dans le repère (d, q) jusqu'à une valeur de commande suivant une constante de temps fonction de la constante de temps rotorique.

6. Système selon la revendication 5, caractérisé en ce qu'il comporte une structure (24) à régulations en cascade et que cette structure permet de limiter le courant lorsque l'évolution de la composante $V_q$ de la tension vers la valeur de commande du moteur est plus rapide que la constante de temps rotorique.

## Patentansprüche

1. System zur Steuerung der Stromversorgung eines Asynchronmotors, der von einem Wechselstromnetz über einen Drehzahlwandler (10) versorgt wird, mit einer am Netz angeschlossenen Gleichrichterbrücke (11), einem Gleichspannungs-Zwischenkreis mit einem Kondensator (16) und einem Wechselrichter (13) mit an den Phasenwicklungen des Motors angeschlossenen Schaltern; wobei das System Mittel zur kontrollierten Rücknahme der Geschwindigkeit des Motors nach einer Versorgungsunterbrechung des Motors umfaßt, dadurch gekennzeichnet, daß die Mittel für die kontrollierte Rücknahme eine Identifikationsstruktur (28) umfassen, die ermöglichen, die Stromgeschwindigkeit ω des Motors einzuschätzen, ab dem Wert der Winkelposition des vom Motor entwickelten Spannungsvektors, und die den auf den Motor bei der kontrollierten Rücknahme aufzubringenden Spannungsvektor winkelmäßig in einer orthogonalen Drehmarke (d, q) positionieren, wo die Achse (d) dem Motorstrom entspricht und die Achse (q) $\pi / 2$ vor (d) angeordnet ist, um ihn mit dem vom Motor entwickelten Spannungsvektor in Übereinstimmung zu bringen.

2. System nach Anspruch 1, dadurch gekennzeichnet, daß die Identifikationsstruktur (28) eine Einschätzungsstruktur der Geschwindigkeit ω umfaßt, realisiert ab einem Winkelberechnungsblock (33), der die Winkelposition des Spannungsvektors durch Berechnung seines Winkels α in Bezug auf eine in Bezug auf den Stator des Motors feste orthogonale Marke $(\alpha, \beta)$ bestimmt, sowie einen Ableitungsblock (34), der den Winkel α ableitet.

3. System nach Anspruch 2, dadurch gekennzeichnet, daß der Winkelberechnungsblock (33) den Winkel α durch die Berechnung von Vβ / Vα bestimmt, wo Vα und Vβ die Koordinaten des Spannungsvektors V in der Marke $(\alpha, \beta)$ sind, sowie durch eine Wertetabelle, die eine Funktion ATN (Vβ / Vα) definiert.

4. System nach einem der vorstehend genannten Ansprüche, dadurch gekennzeichnet, daß die Identifikationsstruktur (28) einen Positionierungsblock (35) des Spannungsvektors in der Marke (d, q) umfaßt, so daß der Spannungsvektor von der Achse (q) getragen wird, durch Initialisierung der Achse (d) in Bezug auf die Achse (α) nach einem Winkel θ,

wie beispielsweise $\theta = \alpha - \pi / 2$ oder $\theta = \alpha + \pi / 2$, je nach Vorzeichen der Motordrehzahl.

5. System nach einem der vorstehend genannten Ansprüche, dadurch gekennzeichnet, daß die Mittel zur kontrollierten Rücknahme eine Vorrichtung (36) für die progressive Erhöhung der Komponente Vq der Spannung in der Marke (d, q) bis auf einen Steuerwert nach einer Zeitkonstante, Funktion der rotorischen Zeitkonstante, umfassen.

6. System nach Anspruch 5, dadurch gekennzeichnet, daß es eine Kaskadenregelstruktur (24) umfaßt, und daß diese Struktur ermöglicht, den Strom zu begrenzen, wenn die Weiterentwicklung der Komponente Vq der Spannung zum Steuerwert des Motors hin schneller ist als die rotorische Zeitkonstante.

## Claims

1. System for controlling the power supply of an asynchronous motor powered by an AC network through a speed variator (10) comprising a rectifier bridge (11) connected to the network, an intermediate DC circuit (12) equipped with a capacitor (16) and an inverse rectifier (13) equipped with switches and connected to the motor phase windings; the system comprising means of restoring control of the motor speed after the motor supply has been switched off, characterized in that the means of restoring control comprise an identification structure (28) that estimates the electrical speed ω of the motor starting from a measurement of the angular position of the voltage vector developed by the motor, and sets the angular position of the voltage vector to be applied to the motor at the time of restored control to make it correspond to the voltage vector developed by the motor, in a rotating orthogonal coordinate system (d, q) in which the (d) axis corresponds to the motor flux and the (q) axis is $\frac{\pi}{2}$ ahead of the (d) axis.

2. System according to claim 1, characterized in that the identification structure (28) comprises a structure for estimating the speed ω using an angle calculation block (33) that determines the angular position of the voltage vector by calculating its angle α with respect to an orthogonal coordinate system $(\alpha, \beta)$ fixed with respect to the motor stator, and a differentiation block (34) that differentiates the angle α.

3. System according to claim 2, characterized in that the angle calculation block (33) determines the angle α by calculating $\frac{V\beta}{V\alpha}$ where Vα and Vβ are the coordinates of the voltage vector V in the $(\alpha, \beta)$ coordinate system, and using a table of values that defines a function $ATN = (\frac{V\beta}{V\alpha})$.

4. System according to any one of the previous claims, characterized in that the identification structure (28) comprises a positioning block (35) that positions the voltage vector in the (d, q) coordinate system such that the voltage vector is carried by the (q) axis, by initializing the (d) axis at an angle $\theta$ with respect to the ($\alpha$) axis such that $\theta = \alpha - \frac{\pi}{2}$, or $\theta = \alpha + \frac{\pi}{2}$ depending on the sign of the motor speed.

5. System according to any one of the claims, characterized in that the restored control means comprise a device (36) for gradually increasing the voltage component $V_q$ in the (d, q) coordinate system up to a control value using a time constant that depends on the rotor time constant.

6. System according to claim 5, characterized in that it comprises a structure (24) with cascade regulations and that this structure can limit the current when the variation of the component $V_q$ of the voltage towards the motor control value is faster than the rotor time constant.

FIG. 1

FIG. 2

100

ATN(x) ou ATN(1/x)

$$|V_{beta}| < |V_{alpha}|\,?$$ — oui

$$Alpha = \pi/2 - ATN(|V_{alpha}|/|V_{beta}|)$$

$$Alpha = ATN(|V_{beta}|/|V_{alpha}|)$$

Correction
suivant le quadrant

$$V_{beta}/V_{alpha} > 0\,?$$ — oui

$$Alpha = -Alpha$$

101

$$V_{alpha} > 0\,?$$ — oui

$$Alpha = Alpha + \pi$$

$$Alpha > 0\,?$$ — oui

$$Alpha = Alpha + 2\pi$$

Variation
d'angle

$$dAlpha = Alpha - Alphaprec$$
$$Alphaprec = Alpha$$

102

Correction de
la discontinuité

$$|dAlpha| < \pi\,?$$ — oui

$$dAlpha > 0\,?$$ — oui

$$dAlpha = dAlpha + 2\pi$$

$$dAlpha = dAlpha - 2\pi$$

Vitesse calculée

$$\omega = dAlpha/dt$$

103

FIG. 3

9

Vitesse moteur

Courant de ligne

FIG. 4

Vitesse moteur

Courant de ligne

FIG. 5